# EUROPÄISCHE PATENTANMELDUNG

(11) **EP 0 683 293 A1**
(43) Veröffentlichungstag der Anmeldung: **22.11.1995**
(21) Anmeldenummer: 95105233.1
(22) Anmeldetag: 07.04.1995
(51) Int. Cl.: E05B 49/00, B60R 25/00, H04L 9/32

(54) **Verfahren zum Betrieb eines Datenübertragungssystems aus einem Transponder und einem Lesegerät**

(30) Priorität: 14.01.1995 DE 19501004; 03.05.1994 DE 4415427
(71) Anmelder: TEMIC TELEFUNKEN microelectronic GmbH, D-74072 Heilbronn (DE)
(72) Erfinder: Doerfler, Reiner, Dr., D-90562 Heroldsberg (DE); Hettich, Gerhard, Dr., D-90599 Dietenhofen (DE); Friedrich, Ferdinand, D-90562 Heroldsberg (DE); Rupprecht, Thomas, D-90537 Moosbach (DE)
(74) Vertreter: Maute, Hans-Jürgen, Dipl.-Ing.

(57) **Zusammenfassung**

Beschrieben wird ein Verfahren zum Betrieb eines Datenübertragungssystems aus einem Transponder (1) und einem Lesegerät (2), wobei zur verifizierbaren Datenübertragung zwischen Lesegerät und Transponder das Lesegerät nach seiner Aktivierung eine Lesegerät-Nachricht (LM) aussendet, der Transponder nach seiner Aktivierung die Lesegerät-Nachricht empfängt und eine erste Transponder-Nachricht (TM1) an das Lesegerät überträgt, ein Verifizierungsvorgang mittels eines im Transponder gespeicherten Transponder-Festcodes (TFC) und eines im Lesegerät gespeicherten Lesegerät-Festcodes (LFC) durchgeführt wird sowie vom Lesegerät nach erfolgreicher Verifizierung ein codierbares Ausgangssignal ausgegeben werden kann. Lesegerät-Festcode bzw. Transponder-Festcode werden dem Lesegerät bzw. dem Transponder als geheime und nicht-auslesbare Identifikationsnummern zugeordnet und mittels kryptologischer Protokolle bei der bidirektionalen Datenübertragung zwischen Lesegerät und Transponder verifiziert.

## Beschreibung

Die Erfindung betrifft ein Verfahren gemäß dem Oberbegriff des Patentanspruchs 1. Ein derartiges Verfahren ist aus der EP 0 521 547 A1 bekannt.

Zur Übermittlung verschlüsselter elektronischer Daten sind Datenübertragungssysteme aus einer batteriebetriebenen (IR-/HF-) Fernbedienung als Sendemodul und einem geeigneten Empfängermodul gebräuchlich. Daneben werden neuerdings auch Datenübertragungssyteme aus Transponder und Lesegerät eingesetzt, bei denen durch induktive Kopplung zunächst eine Energieübertragung zwischen Lesegerät und Transponder und anschließend eine Datenübertragung zwischen Transponder (Sender) und Lesegerät (Empfänger) vorgenommen wird. Derartige Datenübertragungssysteme kommen insbesondere im Kfz-Bereich als Kombination aus elektronischem Schlüssel (Transponder) und elektronischem Schloß (Lesegerät) zur Bedienung von Schließanlagen und Diebstahlsicherungen in Form von Wegfahrsperren in zunehmendem Maße auf den Markt.
Die Datenübertragung im RF-Bereich (typ. 100 kHz bis 450 kHz) zwischen dem im wesentlichen aus einem Integrierten Schaltkreis (IC) und einer Spule bestehenden Transponder und dem Lesegerät kann auf zweierlei Weise erfolgen: entweder unidirektional mittels eines Festcode-Transponders, der bei jedem Auslesevorgang (bei jeder Datenübertragung) einen in einem Festwertspeicher (PROM) des ICs Programmierten gleichbleibenden Code als Paßwort überträgt oder bidirektional mittels eines "Read/Write"-Transponders, der bei jedem Auslesevorgang (bei jeder Datenübertragung) einen in einem Schreib-/Lesespeicher (EEPROM) des ICs abgespeicherten variablen Code als Paßwort überträgt und nach erfolgreicher Authentifizierung vom Lesegerät einen neuen Code erhält und in das EEPROM einträgt.
Nachteilig hierbei ist, daß bei einer Festcode-Datenübertragung durch unbefugtes Auslesen des Codes ein Mißbrauch leicht möglich ist (beispielsweise kann ein Kraftfahrzeug mit einem entsprechend programmierten Transponder-Nachbau beliebig oft gestartet werden), während bei einer Wechselcode-Datenübertragung ein Mißbrauch durch unbefugtes Auslesen zwar weitgehend ausgeschlossen ist, diese jedoch wesentlich kostspieliger ist und aufgrund des relativ hohen Energiebedarfs eine eingeschränkte Reichweite aufweist.

Bei dem in der EP 0 521 547 beschriebenen Verfahren wird durch eine bidirektionale Kommunikation zwischen dem in einem Kraftfahrzeug angeordneten Lesegerät und dem Transponder bei jeder Datenübertragung ein Verifizierungsvorgang durchgeführt, indem nach der Aktivierung des Lesegeräts von diesem als Lesegerät-Nachricht ein Lesegerät-Paßwort im Klartext zum Transponder übertragen wird, dieses Lesegerät-Paßwort vom Transponder empfangen, mit einem im Transponder gespeicherten Transponder-Festcode verglichen und eine Verifizierung vom Transponder hinsichtlich einer Übereinstimmung von Lesegerät-Paßwort und Transponder-Festcode vorgenommen wird; im Falle deren Übereinstimmung wird anschließend zusätzlich eine weitere Verifizierung im Lesegerät durchgeführt, indem als Transponder-Nachricht ein Transponder-Paßwort im Klartext zum Lesegerät übertragen und dieses im Lesegerät auf Übereinstimmung mit einem im Lesegerät abgespeicherten Lesegerät-Festcode überprüft wird. Da die Übertragung der Daten (Paßworte) immer im Klartext erfolgt, ist ein Schutz vor Mißbrauch durch unbefugtes Abhören oder Auslesen nicht lückenlos gewährleistet.

Der Erfindung liegt die Aufgabe zugrunde, ein Verfahren gemäß dem Oberbegriff des Patentanspruchs 1 anzugeben, bei dem eine hohe Mißbrauchsicherheit gegeben ist und eine kostengünstige Datenübertragung mit vorteilhaften Eigenschaften - insbesondere hinsichtlich Energieverbrauch und Reichweite - ermöglicht wird.
Diese Aufgabe wird erfindungsgemäß durch die Merkmale im Kennzeichen des Patentanspruchs 1 gelöst.
Vorteilhafte Weiterbildungen und Ausgestaltungen des Verfahrens ergeben sich aus den Unteransprüchen.

Die Verifizierung der geheimen, nicht-auslesbaren Festcodes (Kommunikationsschlüssel) von Lesegerät und Transponder erfolgt durch eine bidirektionale Datenübertragung zwischen Lesegerät und Transponder mittels kryptologischer Protokolle; d. h. die Übereinstimmung von Lesegerät-Festcode und Transponder-Festcode wird durch Austausch verschlüsselter Lesegerät-Nachrichten bzw. Transponder-Nachrichten indirekt überprüft und verifiziert. Die Übertragung der Nachrichten, deren Überprüfung und der Verifizierungsvorgang kann unterschiedlich erfolgen:
- als Lesegerät-Nachricht wird zunächst eine einmalig gültige Lesegerät-Zufallszahl an den Transponder übertragen, beispielsweise generiert durch einen als Pseudozufallsgenerator fungierenden Algorithmus; vom Transponder wird aus dieser Lesegerät-Zufallszahl und des als Schlüssel fungierenden Transponder-Festcodes mittels eines abgespeicherten Algorithmus oder durch elektronische Verknüpfung ein Transponder-Geheimtext generiert und dieser als erste Transponder-Nachricht an das Lesegerät übertragen. Im Lesegerät wird entweder durch gleiche Vorgehensweise wie im Transponder ein Lesegerät-Geheimtext generiert oder umgekehrt die erste Transponder-Nachricht wieder entschlüsselt, wobei hierfür jeweils der Lesegerät-Festcode als Schlüssel dient; eine Verifizierung wird entweder hinsichtlich einer Übereinstimmung des übertragenen Transponder-Geheimtextes mit dem Lesegerät-Geheimtext durchgeführt oder hinsichtlich einer Übereinstimmung des entschlüsselten Ergebnisses mit der Lesegerät-Zufallszahl.
- durch weitere Authentifizierungsprotokolle zwischen Lesegerät und Transponder kann die Abhörsicherheit noch gesteigert werden: im Transponder kann eine eigene Transponder-Zufallszahl erzeugt und mit der vom Lesegerät übermittelten LesegerätZufallszahl zu einer Geheim-Zufallszahl verknüpft werden; diese Geheim-Zufallszahl wird mit dem Transponder-Festcode als Schlüssel zum Transponder-Geheimtext verschlüsselt. Die Transponder-Zufallszahl wird anhand einer zweiten Transponder-Nachricht dem Lesegerät entweder im Klartext übermittelt oder mit einem Transponder-Schlüssel verschlüsselt übertragen; im Lesegerät wird bei Kenntnis der Transponder-Zufallszahl (ggf. nach Entschlüsselung mit einem Lesegerät-Schlüssel) unter Heranziehung der Lesegerät-Zufallszahl die Geheim-Zufallszahl generiert, diese Geheim-Zufallszahl mit dem Lesegerät-Festcode zum Lesegerät-Geheimtext verschlüsselt und dieser auf Übereinstimmung mit dem Transponder-Geheimtext überprüft oder umgekehrt der Transponder-Geheimtext mit dem Lesegerät-Festcode entschlüsselt und das Ergebnis auf Übereinstimmung mit der Geheim-Zufallszahl überprüft.

Nach der erfolgreichen Authentifizierung zwischen Transponder und Lesegerät können die mit dem Lesegerät über Kommunikationsleitungen verbundenen Steuergeräte freigeschaltet werden - vorzugsweise durch bidirektionale Kommunikation in kryptologischen Protokollen; beispielsweise dienen die Daten auf den Kommunikationsleitungen als Steuersignal zur Verriegelung/Entriegelung der Wegfahrsperre eines Kraftfahrzeugs im Motorsteuergerät: wird die Zündung ausgeschaltet und bleibt sie beispielsweise mehr als 15 Sekunden ausgeschaltet, werden sämtliche Steuergeräte und das Lesegerät gesperrt; danach muß das oben beschriebene Verfahren der kryptologischen Datenübertragung wiederholt werden. Das Lesegerät kann auch Bestandteil eines weiteren Steuergeräts des Kraftfahrzeugs sein, beispielsweise Bestandteil des Motorsteuergeräts.
Da bei jeder Datenübertragung ein Verifizierungsvorgang durch bidirektionale, geheime Kommunikation mittels kryptologischer Protokolle zwischen Lesegerät und Transponder durchgeführt wird, ist eine hohe Abhörsicherheit bzw. Sicherheit vor Mißbrauch (infolge unbefugten Auslesens) gegeben; durch die Verwendung eines Festcodes im Lesegerät und im Transponder (beispielsweise in einem PROM abgelegt) kann zudem gleichzeitig ein kostengünstiges Übertragungsverfahren mit geringem Energiebedarf und demzufolge relativ großer Reichweite realisiert werden.

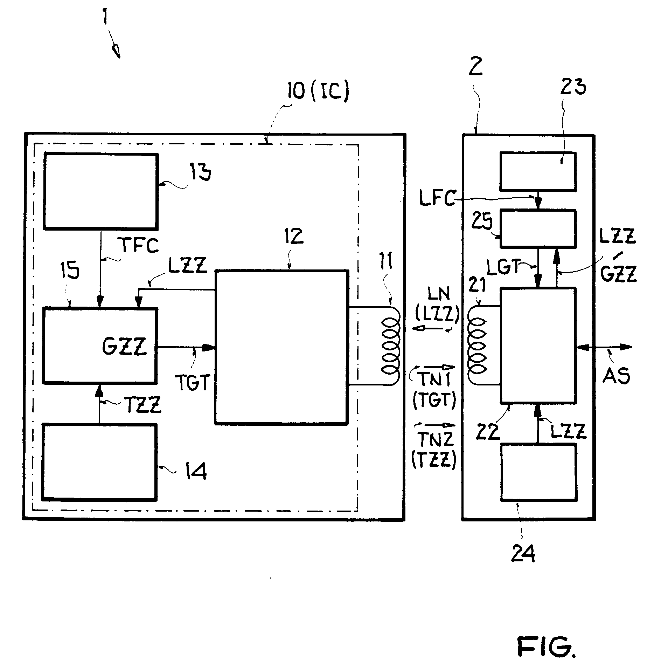

Das Verfahren wird im folgenden anhand der Zeichnung näher erläutert: in der Figur ist ein Datenübertragungssystem für ein "kryptologisches" Datenübertragungsverfahren dargestellt.

Gemäß der Figur besteht der Transponder 1 aus der Spule 11 zur Energieübertragung und Datenübertragung sowie aus dem integrierten Schaltkreis (IC) 10; der IC 10 enthält eine Steuereinheit 12 zur Spannungsversorgung und Ablaufsteuerung, eine Speichereinheit 13 - in dieser ist (beispielsweise in einem PROM) der nicht-auslesbare, geheime Transponder-Festcode TFC gespeichert -, einen Zufallsgenerator 14 - von diesem wird (beispielsweise durch einen bestimmten Algorithmus) die Transponder-Zufallszahl TZZ generiert - und eine Verschlüsselungseinheit 15 zur Generierung des Transponder-Geheimtextes TGT aus der Lesegerät-Zufallszahl LZZ oder aus der durch Verknüpfung von Lesegerät-Zufallszahl LZZ und Transponder-Zufallszahl TZZ gewonnenen Geheim-Zufallszahl GZZ mit dem Transponder-Festcode TFC als Schlüssel. Das Lesegerät 2 besteht aus der Spule 21, die gleichzeitig zur Energieübertragung und zur Datenübertragung dient, aus der Steuereinheit 22 zur Ablaufsteuerung, aus dem Zufallsgenerator 24 zur Generierung der Lesegerät-Zufallszahl LZZ, aus der Speichereinheit 23 zur Speicherung des geheimen, nicht-auslesbaren Lesegerät-Festcodes LFC und aus der Verschlüsselungseinheit 25 zur Generierung des Lesegerät-Geheimtextes LGT aus der Lesegerät-Zufallszahl LZZ oder aus der durch Verknüpfung von Lesegerät-Zufallszahl LZZ und Transponder-Zufallszahl TZZ gewonnenen Geheim-Zufallszahl GZZ mit dem Lesegerät-Festcode LFC als Schlüssel. Nach der Aktivierung des Lesegeräts 2 - beispielsweise bei einem Kraftfahrzeug durch Betätigung des Türgriffs oder durch Einschalten der Zündung - wird als Lesegerät-Nachricht LN die im Zufallsgenerator 24 beispielsweise kryptologisch erzeugte Lesegerät-Zufallszahl LZZ von der Spule 21 - nach der Aktivierung des Transponders 1 infolge induktiver Energieübertragung von der Lesegerät-Spule 21 zur Transponder-Spule 11 - dem Transponder 1 übermittelt (bei der kryptologischen Erzeugung der Lesegerät-Zufallszahl LZZ wird in der Speichereinheit 23 ein Zähler abgespeichert, der vom Zufallsgenerator 24 mit dem Lesegerät-Festcode LFC als Schlüssel zur Lesegerät-Zufallszahl LZZ verschlüsselt wird; nach Inkrementierung des Zählers wird der neue Zählerstand in der Speichereinheit 23 abgespeichert und hierdurch die Einmaligkeit der Lesegerät-Zufallszahl LZZ sichergestellt). Mit dem in der Speichereinheit 13 des Transponders 1 abgespeicherten Transponder-Festcode TFC wird durch die Verschlüsselungseinheit 15 entweder die Lesegerät-Zufallszahl LZZ oder die durch Verknüpfung von Lesegerät-Zufallszahl LZZ und der vom Zufallsgenerator 14 generierten Transponder-Zufallszahl TZZ (beispielsweise durch eine bitweise XOR-Verknüpfung der Zufallszahlen LZZ und TZZ) gewonnene Geheim-Zufallszahl GZZ zum Transponder-Geheimtext TGT verschlüsselt. Dieser Transponder-Geheimtext TGT wird als erste Transponder-Nachricht TN1 an das Lesegerät 2 übertragen, von der Spule 21 des Lesegeräts 2 empfangen und von der Steuereinheit 22 des Lesegeräts 2 durch Vergleich mit einem im Lesegerät 2 aus dem generierten Lesegerät-Geheimtext LGT verifiziert, der entweder durch Verschlüsselung der vom Zufallsgenerator 24 erzeugten LesegerätZufallszahl LZZ oder durch Verschlüsselung mit der vom Lesegerät 2 aus Lesegerät-Zufallszahl LZZ und Transponder-Zufallszahl TZZ mit dem in der Speichereinheit 23 gespeicherten Lesegerät-Festcode LFC als Schlüssel generierten Geheim-Zufallszahl GZZ gewonnen wurde. Zur Generierung der Geheim-Zufallszahl GZZ vom Lesegerät 2 muß dem Lesegerät 2 die Transponder-Zufallszahl TZZ bekannt sein; diese wird vom Transponder 1 an das Lesegerät 2 vor der oder anschließend an die erste Transponder-Nachricht TN1 (Transponder-Geheimtext TGT) durch eine zweite Transponder-Nachricht TN2 entweder im Klartext oder mittels eines Transponder-Schlüssels verschlüsselt (in diesem Fall muß sie vom Lesegerät 2 mittels eines Lesegerät-Schlüssels entschlüsselt werden) übermittelt - der Transponder-Schlüssel bzw. LesegerätSchlüssel wird vorzugsweise unterschiedlich von den beiden als erster Schlüssel verwendeten Festcodes (Transponder-Festcode TFC bzw. Lesegerät-Festcode LFC) gewählt.
Bei einer Übereinstimmung von Transponder-Geheimtext TGT und Lesegerät-Geheimtext LGT wird die Datenübertragung als gültig verifiziert; daraufhin kann das Lesegerät 2 über ein codierbares Ausgangssignal AS die (beispielsweise über Kommunikationsleitungen angeschlossenen) Steuergeräte - vorzugsweise in bidirektionalen kryptologischen Protokollen - freischalten.

## Patentansprüche

1. Verfahren zum Betrieb eines Datenübertragungssystems aus einem Transponder (1) und einem Lesegerät (2), wobei zur verifizierbaren Datenübertragung zwischen Lesegerät (2) und Transponder (1)
- das Lesegerät (2) nach seiner Aktivierung eine Lesegerät-Nachricht (LN) aussendet,
- der Transponder (1) nach seiner Aktivierung die Lesegerät-Nachricht (LN) empfängt und eine erste Transponder-Nachricht (TN1) an das Lesegerät (2) überträgt,
- ein Verifizierungsvorgang mittels eines im Transponder (1) gespeicherten Transponder-Festcodes (TFC) und eines im Lesegerät (2) gespeicherten Lesegerät-Festcodes (LFC) durchgeführt wird,
- vom Lesegerät (2) nach erfolgreicher Verifizierung ein codierbares Ausgangssignal (AS) ausgegeben werden kann,
dadurch gekennzeichnet:
- Lesegerät-Festcode (LFC) bzw. Transponder-Festcode (TFC) werden dem Lesegerät (2) bzw. dem Transponder (1) als geheime und nicht-auslesbare Identifikationsnummern zugeordnet,
- Lesegerät-Festcode (LFC) und Transponder-Festcode (TFC) werden mittels kryptologischer Protokolle bei der bidirektionalen Datenübertragung zwischen Lesegerät (2) und Transponder (1) verifiziert.

2. Verfahren nach Anspruch 1, dadurch gekennzeichnet, daß
- vom Lesegerät (2) als Lesegerät-Nachricht (LN) eine im Lesegerät (2) generierte variable Lesegerät-Zufallszahl (LZZ) ausgesendet wird,
- im Transponder (1) unter Verwendung der Lesegerät-Zufallszahl (LZZ) und des als Schlüssel dienenden Transponder-Festcodes (TFC) ein Transponder-Geheimtext (TGT) generiert wird,
- der Transponder-Geheimtext (TGT) als erste Transponder-Nachricht (TN1) vom Transponder (1) an das Lesegerät (2) übertragen wird,
- im Lesegerät (2) unter Verwendung der Lesegerät-Zufallszahl (LZZ) und des als Schlüssel dienenden Lesegerät-Festcodes (LFC) ein Lesegerät-Geheimtext (LGT) generiert wird,
- ein Verifizierungsvorgang vom Lesegerät (2) durchgeführt wird, indem die Übereinstimmung von Transponder-Geheimtext (TGT) und Lesegerät-Geheimtext (LGT) überprüft wird.

3. Verfahren nach Anspruch 1, dadurch gekennzeichnet, daß
- vom Lesegerät (2) als Lesegerät-Nachricht (LN) eine im Lesegerät (2) generierte variable Lesegerät-Zufallszahl (LZZ) ausgesendet wird,
- im Transponder (1) unter Verwendung der Lesegerät-Zufallszahl (LZZ) und des als Schlüssel dienenden Transponder-Festcodes (TFC) ein Transponder-Geheimtext (TGT) generiert wird,
- der Transponder-Geheimtext (TGT) als erste Transponder-Nachricht (TN1) vom Transponder (1) an das Lesegerät (2) übertragen wird,
- im Lesegerät (2) unter Verwendung des als Schlüssel dienenden Lesegerät-Festcodes (LFC) der Transponder-Geheimtext (TGT) entschlüsselt wird,
- ein Verifizierungsvorgang vom Lesegerät (2) durchgeführt wird, indem die Übereinstimmung der aus dem entschlüsselten Transponder-Geheimtext (TGT) gewonnenen Lesegerät-Zufallszahl (LZZ) und der im Lesegerät (2) generierten Lesegerät-Zufallszahl (LZZ) überprüft wird.

4. Verfahren nach Anspruch 2 oder 3, dadurch gekennzeichnet, daß der Transponder-Geheimtext (TGT) durch Verschlüsselung der Lesegerät-Zufallszahl (LZZ) mit dem Transponder-Festcode (TFC) als Schlüssel generiert wird.

5. Verfahren nach Anspruch 2, dadurch gekennzeichnet, daß der Lesegerät-Geheimtext (LGT) durch Verschlüsselung des Lesegerät-Festcodes (LFC) mit der LesegerätZufallszahl (LZZ) generiert wird.

6. Verfahren nach Anspruch 2 oder 3, dadurch gekennzeichnet, daß der Transponder-Geheimtext (TGT) durch Verschlüsselung einer Geheim-Zufallszahl (GZZ) mit dem Transponder-Festcode (TFC) als Schlüssel generiert wird, die durch Verknüpfung von Lesegerät-Zufallszahl (LZZ) und einer im Transponder (1) generierten variablen Transponder-Zufallszahl (TZZ) erzeugt wird.

7. Verfahren nach Anspruch 6, dadurch gekennzeichnet, daß die im Transponder (1) generierte Transponder-Zufallszahl (TZZ) vom Transponder (1) mittels einer zweiten Transponder-Nachricht (TN2) an das Lesegerät (2) übertragen wird, und daß entweder der Lesegerät-Geheimtext (LGT) durch Verschlüsselung der vom Lesegerät (2) aus der Verknüpfung von Lesegerät-Zufallszahl (LZZ) und Transponder-Zufallszahl (TZZ) generierten Geheim-Zufallszahl (GZZ) mit dem Lesegerät-Festcode (LFC) als Schlüssel erzeugt wird oder der Transponder-Geheimtext (TGT) vom Lesegerät (2) mittels des Lesegerät-Festcodes (LFC) entschlüsselt wird.

8. Verfahren nach Anspruch 7, dadurch gekennzeichnet, daß die im Transponder (1) generierte Transponder-Zufallszahl (TZZ) mittels der zweiten Transponder-Nachricht (TN2) im Klartext an das Lesegerät (2) übertragen wird.

9. Verfahren nach Anspruch 7, dadurch gekennzeichnet, daß die im Transponder (1) generierte Transponder-Zufallszahl (TZZ) mittels der zweiten Transponder-Nachricht (TN2) verschlüsselt an das Lesegerät (2) übertragen wird.

10. Verfahren nach Anspruch 9, dadurch gekennzeichnet, daß die Transponder-Zufallszahl (TZZ) vom Transponder (1) mit einem Transponder-Schlüssel verschlüsselt wird, und daß die zweite Transponder-Nachricht (TN2) vom Lesegerät (2) mit einem Lesegerät-Schlüssel entschlüsselt wird.

11. Verfahren nach Anspruch 10, dadurch gekennzeichnet, daß als Transponder-Schlüssel bzw. Lesegerät-Schlüssel vom Transponder-Festcode (TFC) bzw. Lesegerät-Festcode (LFC) abweichende Schlüssel gewählt werden.

12. Verfahren nach einem der Ansprüche 1 bis 11, dadurch gekennzeichnet, daß die Lesegerät-Zufallszahl (LZZ) und/oder die Transponder-Zufallszahl (TZZ) kryptologisch erzeugt werden, indem ein in einer Speichereinheit (23, 13) von Lesegerät (2) bzw. Transponder (1) abgespeicherter Zähler durch einen Zufallsgenerator (24, 14) unter Verwendung des Lesegerät-Festcodes (LFC) bzw. des Transponder-Festcodes (TFC) als Schlüssel verschlüsselt wird, und daß der inkrementierte Zähler als neuer Zählerstand in der Speichereinheit (23, 13) von Lesegerät (2) bzw. Transponder (1) abgespeichert wird.

13. Verfahren nach einem der Ansprüche 1 bis 12, dadurch gekennzeichnet, daß die Lesegerät-Nachricht (LN) nach der Aktivierung des Lesegeräts (2) in bestimmten zeitlichen Abständen ausgesendet wird.

14. Verfahren nach einem der Ansprüche 1 bis 13, dadurch gekennzeichnet, daß die Aktivierung des Lesegeräts (2) durch Betätigung eines Schaltelements erfolgt.

15. Verfahren nach einem der Ansprüche 1 bis 13, dadurch gekennzeichnet, daß die Aktivierung des Transponders (1) durch Energieübertragung infolge induktiver Kopplung vom Lesegerät (2) erfolgt.
